# EUROPEAN PATENT APPLICATION

(11) **EP 3 461 765 A1**
(43) Date of publication of application: **03.04.2019**
(21) Application number: 18189742.2
(22) Date of filing: 20.08.2018
(51) Int. Cl.: B65G 49/06, B65D 85/48

(54) **STAND FOR PLATES**

(30) Priority: 28.09.2017 IT 201700108449
(71) Applicant: Macotec S.R.L., 23010 Rogolo, (SO) (IT)
(72) Inventor: COLLI, Maurizio, 23019 TRAONA SO (IT)
(74) Representative: Modiano, Micaela Nadia

(57) **Abstract**

A stand (10, 100) for plates (L), comprising a base (3, 300), uprights (4, 400) which extend from the base (3, 300), and connecting crossmembers (12, 13, 14, 120, 130) between the uprights; the coupling between the uprights (4, 400) and the base (3, 300) and/or the coupling between the uprights (4, 400) and the connecting crossmembers (12, 13, 14, 120, 130) being detachable.

## Description

The present invention relates to a stand for plates, for example glass plates and the like.

According to the prior art, it is known that the storage of glass plates requires the use of adapted stands, comprising a base and at least two uprights connected thereto, on which the plate rests, in a slightly inclined position.

Generally, there are stands with one resting plane (one upright perpendicular to the base and the other one inclined) or with two resting planes (both the uprights being inclined in relation to the base).

Regardless of the type, known stands are usually custom-built for certain types of plate and the uprights and the base are welded together; the maximum number of plates that the stand can accommodate is linked to the width of the base thereof, while the dimensions of the plate are linked to those of the uprights.

From this it follows that known stands lack versatility, since they cannot be used for storing a number of plates that is different from the designed one and/or plates having dimensions that are different from those for which the stands have been provided.

This also entails that the stands that are present in the warehouse and are not used, must be stored for future use: this in turn entails occupying additional space just to store the unused stands, space which becomes considerable if one considers the overall irregular shape of the stands.

The aim of the present invention is to provide a stand that solves the technical problem described above, obviates the drawbacks and overcomes the limitations of the background art, allowing to have available a stand for plates that is versatile and compact.

Within this aim, an object of the present invention is to provide a stand that can be stored easily when not in use and does not require large volumes for this aim.

Another object of the invention is to provide a stand that is temporarily modifiable quickly and easily to cope with various kinds of requirements of use.

A further object of the invention is to provide a stand that is capable of giving the greatest assurances of reliability and safety in use.

Another object of the invention is to provide a stand that is easy to provide and economically competitive if compared with the background art.

This aim, these objects and others which will become better apparent hereinafter, are achieved by a stand for plates comprising a base, uprights which extend from the base and connecting crossmembers between the uprights, the coupling between the uprights and the base and/or the coupling between the uprights and the connecting crossmembers being detachable.

The term "detachable" means that the coupling can be released and the portions affected by it can be mutually uncoupled.

Further characteristics and advantages of the present invention will become better apparent from the description of two preferred but not exclusive embodiments of a stand, illustrated by way of non-limiting example with the aid of the accompanying drawings, wherein:
Figure 1 is a perspective view of a first embodiment of a stand according to the invention;
Figure 2 is a side view of the stand of the preceding figure;
Figure 3 is a bottom perspective view of a portion of the stand of the previous figures;
Figure 4 is a perspective view of a portion of the stand of the preceding figures in a first configuration of use;
Figure 5 is a side view of the stand of the preceding figures in a second configuration of use;
Figure 6 is a side view of the stand of the preceding figures in a third configuration of use;
Figure 7 is a sectional view of a detail of the stand of the preceding figures;
Figure 8 is a perspective view of a second embodiment of a stand according to the invention;
Figure 9 is a side view of a plate supporting assembly comprising a plurality of stands according to Figure 8;
Figures 10A and 10B are a sectional view and a perspective view of a detail of the stand of Figures 8 and 9.

With reference to the figures, the stand, generally designated by the reference numerals 10 and 100 in two different embodiments, comprises a base 3, 300, uprights 4, 400 extending from the base 3, 300, and connecting crossmembers 12, 13, 14 and 120, 130 between the uprights.

According to the invention, the coupling between the uprights 4, 400 and the base 3, 300 and/or the coupling between the uprights 4, 400 and the connecting crossmembers 12, 13, 14 or 120, 130 is detachable, thus allowing to obtain qualities of versatility and simplicity of storage.

In particular, in the first embodiment shown, the presence of the top crossmember 14, which is detachable, can be noticed.

This allows to modify the "intended use" of the stand; in fact, when the stand is loaded and/or unloaded manually by the operator, the crossmember 14 is not necessary and can be eliminated.

When instead the stand is part of a warehouse that is automatically loaded and/or unloaded by a loading/handling machine, the top crossmember 14 is necessary to support the plate up to its upper edge.

This allows, for example, to have a stand in a base configuration (adapted for the manual loading/unloading of the plates) and then implement it, by adding the crossmember 14, in order to be able to insert it in a context of automatic loading/unloading.

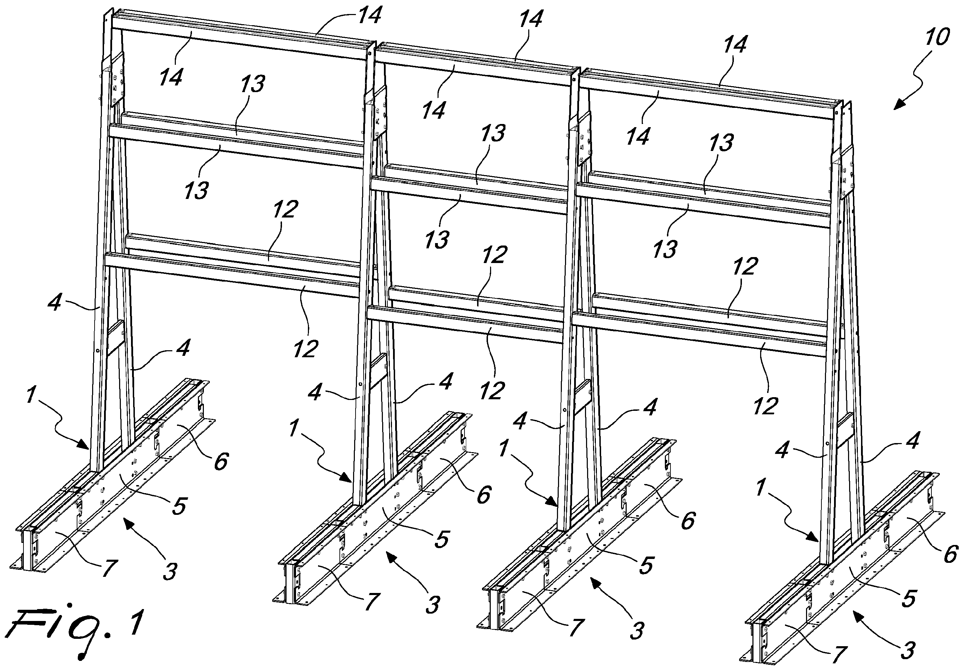

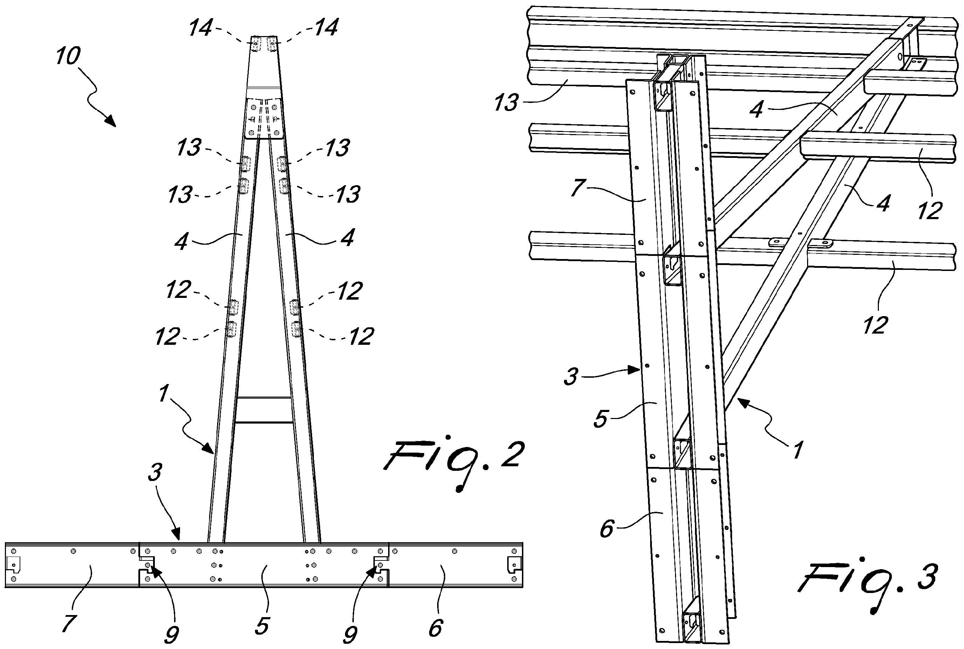

Figures 1-7 show an embodiment of the stand, generally designated by the reference numeral 10, wherein the stand 10 is designed to be of the fixed type, i.e., with the base 3 rested on the ground in order to support the plates L side by side.

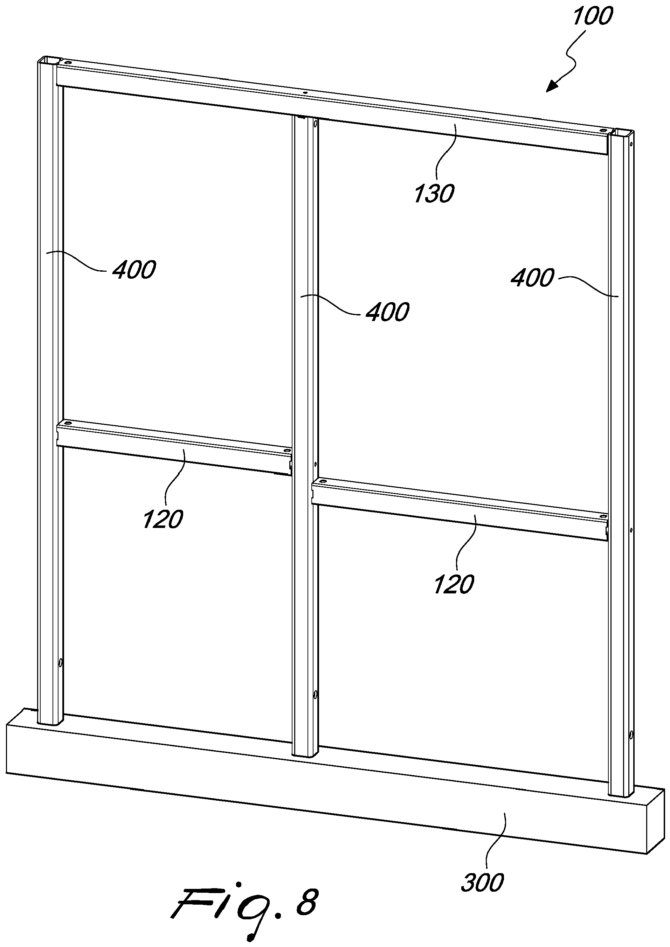

Figures 8-10 instead show a second embodiment of the stand, designated by the reference numeral 100, wherein said stand is a stand adapted to be mounted in a so-called "drawer", in which the individual stands constitute frames which can be moved between a side-by-side resting position and a working position, by virtue of the sliding of the base 300 on adapted guides; further operational details of this solution are omitted since they are well-known to the person skilled in the art and are not useful to the comprehension of the invention.

Moving on initially to an examination of the first embodiment of the stand 10, it should be noted that it comprises a supporting element 1, which in turn comprises the base 3 and at least two uprights 4 that extend from the base 3.

The uprights 4 are usually convergent and inclined with respect to the base 3.

The latter comprises a primary module 5, to which the uprights 4 are coupled, and at least one secondary module 6; the primary module 5 and the at least one secondary module 6 are mutually coupled by means of releasable coupling elements 9, so that the secondary module 6 is interchangeable with respect to the primary module 5.

The releasable coupling elements 9 will be described later in detail; for now it is sufficient to note that these elements can (contrary to welds) be assembled and disassembled with suitable tools, preferably with common tools, which are usually commercially available.

The primary and secondary module are aligned, so as to be part of the resting base of the plates.

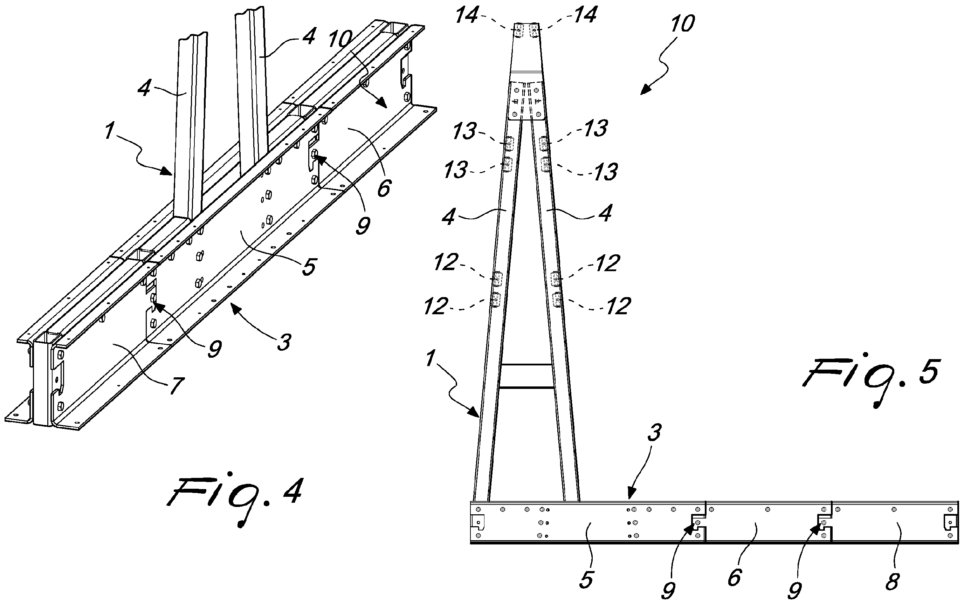

Preferably, but not in a limiting way, as in Figure 4, the uprights 4 extend from the primary module 5 at its terminal ends.

In some configurations, as in the example of Figure 4, the supporting element 1 also comprises a second secondary module 7 that can be coupled to the primary module 5 by means of releasable coupling elements 9; the second secondary module 7 is coupled from the side of the primary module 5 that lies opposite the one coupled to the first primary module 6, so as to generate a base that extends along the two sides.

In the configuration of Figure 5, the supporting element 1 further comprises an additional secondary module 8, which can be coupled to the secondary module 6 by means of releasable coupling elements 9.

Of course, in other configurations, not shown, the additional secondary module 8 can be coupled also, or only, to the secondary module 7, without thereby abandoning the scope of the invention.

In a fully similar way, configurations can be provided in which there are multiple additional secondary modules which are mutually aligned.

Going back to the releasable coupling elements 9, in a base version they comprise screws and corresponding threaded seats or bolts.

In a more advanced version, so as the one shown, the releasable coupling elements 9 instead comprise a male part and a female part of an interlocking coupling and at least one screw-type connection; in this manner the coupling is guided and made easier as well as firm.

This contributes to make the stand 10 easy to disassemble and store when not used; moreover, this allows to accommodate a preset number of plates simply by widening the base 3 by means of modules of suitable length. This is useful also when, in a glassworks, a temporary lengthening is necessary in order to accommodate plates L during loading/unloading steps, in which the available stands might not be enough.

Preferably, the uprights 4 also are coupled to the primary module 5 in a detachable manner, for example by virtue of bolts or screws.

In the preferred embodiment, in order to strengthen the coupling of the uprights to the module 5, the latter comprises for each upright 4 a corresponding accommodation seat, which is configured to accommodate a foot of the upright 4; in this manner, the upright 4 is inserted in the seat and remains in position, where it is then fixed by means of additional screws or bolts.

This helps to make the stand 10 easy to disassemble and store when not used; moreover, this allows to accommodate plates having different dimensions simply by replacing the uprights with equivalents of a length that is adapted to the plates.

In addition to the supporting element 1 described above, the stand 10 comprises a second, a third or more supporting elements which are identical to the first element 1.

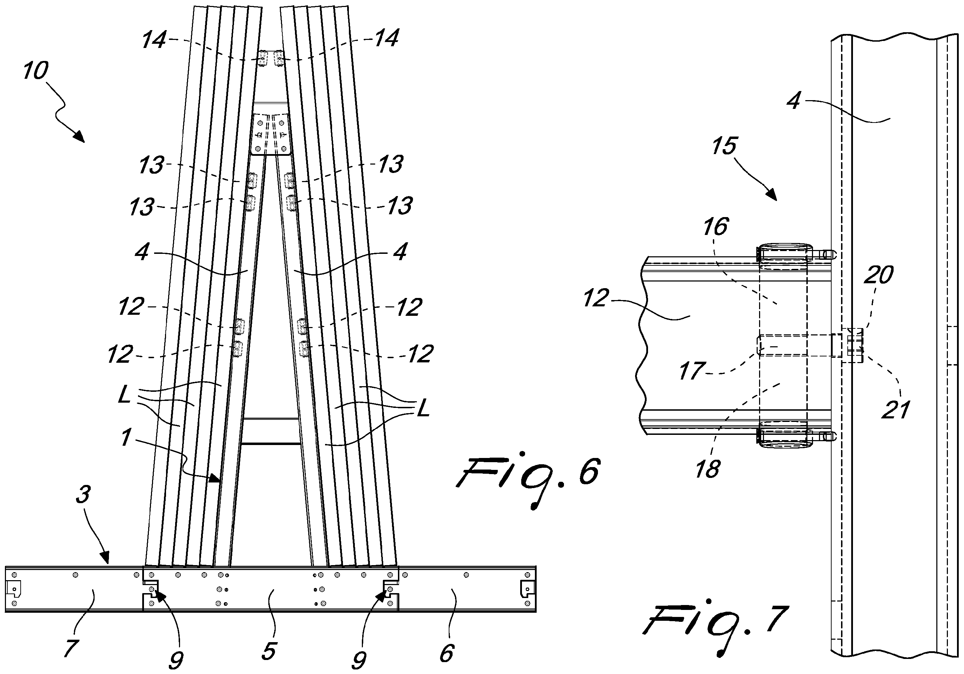

The supporting elements 1 are arranged parallel on the stand 10; the uprights 4 of the first and second supporting elements 1 are connected by at least one crossmember 12, 13, 14 also coupled preferably detachably to the uprights 4 by virtue of screw-type connection means 15, which are visible in the detail of Figure 7 in a preferred embodiment.

In this embodiment, each screw-type connection means 15 comprises:
- a pivot 16 provided with a transverse threaded hole 17,
- engagement seats 18 for the pivot 16 which are provided so as to pass through the crossmember 12, 13, 14,
- an accommodation hole 20 for a screw 21.

The hole 20 passes through the upright 4 and is oriented substantially at right angles, on the same plane, with respect to the engagement seats 18, aligned with the transverse through hole 17: the screw 21 can thus be inserted and can couple strongly but in a manner that allows disassembly the crossmember 12, 13 or 14 and the corresponding upright 4.

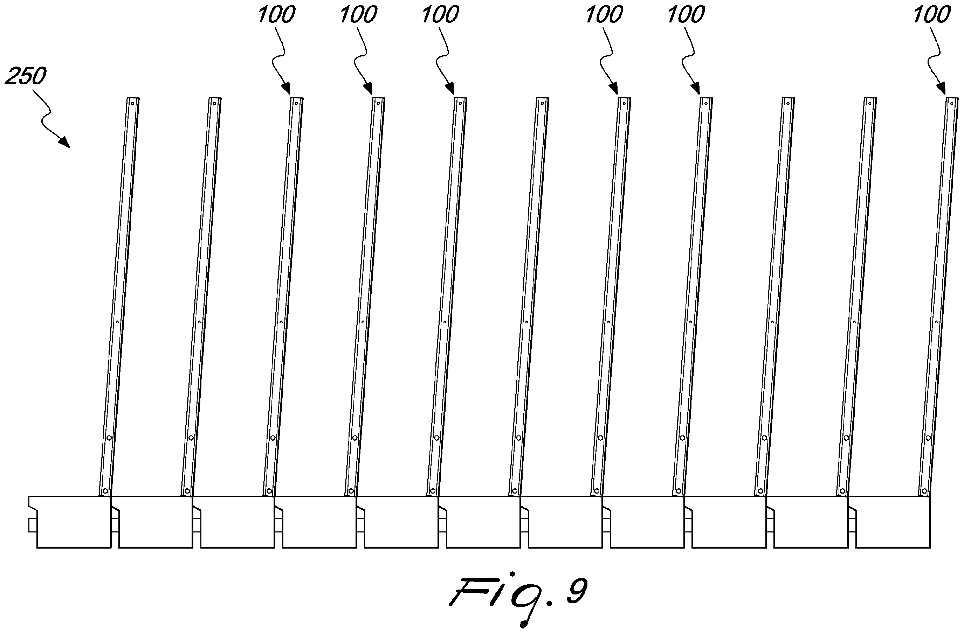

Turning now to the stand 100 shown in Figures 8 -10, as cited above, it provides a frame mounted on a so-called "drawer" 250, shown in Figure 9, in which the individual stands 100 are movable between a resting side-by-side position and a working one, by virtue of the sliding of the base 300.

The structure of the individual stand 100 is, as a whole, simpler than the stand 10 just described: the uprights 400, which are mutually parallel and lie on the same plane that also contains the base 300, extend from the base 300.

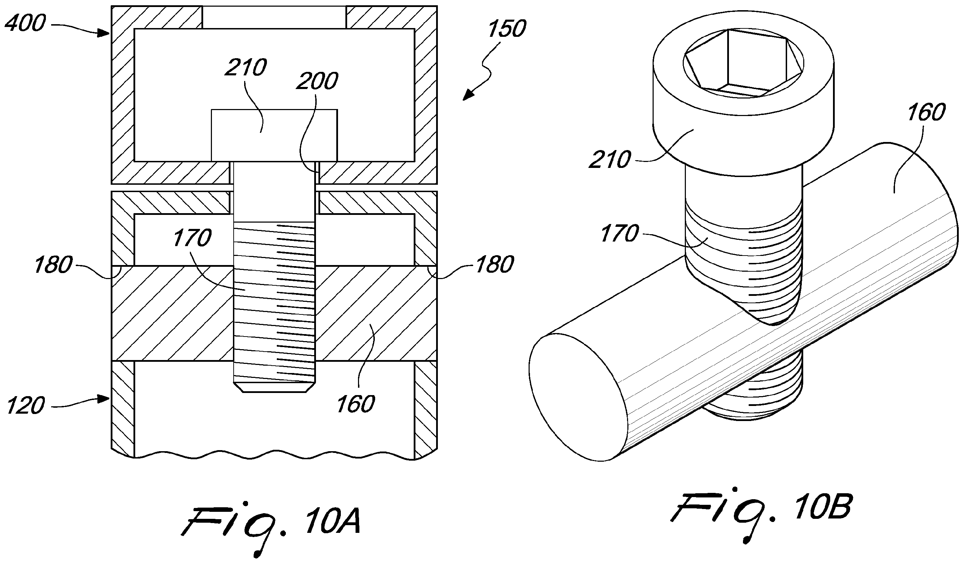

The uprights 400 are mutually connected by at least one crossmember 120, 130, also arranged on the same plane, and coupled to the uprights 400 by virtue of screw-type connection means 150 similar to the ones 15 described above for the connection between the uprights and the crossmembers of the stand 10 and shown in the detail view of Figure 10.

Moving on now to the examination of this last figure, a specific screw-type connecting means 150 is shown therein and is once again fully similar to the means 15.

The screw-type connection means 150 comprises a pivot 160 provided with a transverse threaded hole 170 in which the screw 210 is engaged.

The pivot 160 is coupled to the crossmember 120, 130 by means of engagement seats 180, for example seats with holes that pass through the thickness of the crossmembers.

The screw 210 in turn passes through an accommodation hole 200 in the upright 400.

The hole 200 and the transverse threaded hole 170 are aligned, so that the screw 210 engages both of them, fixing the crossmember and the upright quickly, firmly and releasably.

The operation of the stand is clear and evident from what has been described.

In practice it has been found that the stand, according to the present invention, fully achieves the intended aim and objects since it allows to provide a stand for plates that is versatile and compact.

Another advantage of the stand according to the invention resides in that it provides a stand that can be stored easily when not used and does not require large volumes for this purpose: it can in fact be disassembled and storage is facilitated.

Another advantage of the stand according to the invention resides in that it provides a stand that is temporarily modifiable in a quick and easy way in order to cope with requirements of use of various kinds.

Another advantage of the stand according to the invention resides in that it provides a stand that is reliable, relatively low in cost and safe.

The stand thus conceived is susceptible of numerous modifications and variations, all of which are within the scope of the appended claims.

All the details may further be replaced with other technically equivalent elements.

In practice, the materials used, so long as they are compatible with the specific use, as well as the contingent shapes and dimensions, may be any according to the requirements.

The disclosures in Italian Patent Application No. 102017000108449 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A stand (10, 100) for plates (L), comprising a base (3, 300), uprights (4, 400) which extend from the base (3, 300), and connecting crossmembers (12, 13, 14, 120, 130) between the uprights,
**characterized in that** the coupling between the uprights (4, 400) and the base (3, 300) and/or the coupling between the uprights (4, 400) and the connecting crossmembers (12, 13, 14, 120, 130) is detachable.

2. The stand (10) according to claim 1, **characterized in that** it comprises a supporting element (1), which in turn comprises said base (3) and at least two uprights (4) which extend from the base (3), the base (3) comprising
- a primary module (5) to which said uprights (4) are coupled and
- at least one secondary module (6)
the primary module (5) and the at least one secondary module (6) being mutually coupled by virtue of releasable coupling elements (9), so that the secondary module (6) is interchangeable with respect to the primary module (5).

3. The stand (10) according to claim 2, **characterized in that** the supporting element (1) further comprises a second secondary module (7), which can be coupled to said primary module (5) by virtue of releasable coupling elements (9).

4. The stand (10) according to one or more of the preceding claims, **characterized in that** the supporting element (1) further comprises an additional secondary module (8) which can be coupled to said secondary module (6) by virtue of releasable coupling elements (9).

5. The stand (10) according to one or more of the preceding claims, **characterized in that** said releasable coupling elements (9) comprise a male part and a female part of an interlocking coupling and at least one screw-type connection.

6. The stand (10) according to one or more of the preceding claims, **characterized in that** said uprights (4) are coupled to the primary module (5) detachably, wherein the primary module (5) comprises for each upright (4) a corresponding accommodation seat which is configured to accommodate a foot of the upright (4).

7. The stand (10) according to one or more of the preceding claims, **characterized in that** it comprises a second supporting element (1A), which is identical to the first element (1).

8. The stand (10) according to claim 7, **characterized in that** the uprights (4, 4A) of the first and second supporting elements (1, 1A) are connected by at least one of said crossmembers (12, 13, 14) coupled detachably to said uprights (4, 4A) by virtue of screw-type connection means (15).

9. The stand (10) according to claim 8, **characterized in that** each screw-type connection means (15) comprises:
- a pivot (16) provided with a transverse threaded hole (17),
- engagement seats (18) for the pivot (16) which are provided so as to pass through the crossmember (12, 13, 14),
- an accommodation hole (20) for a screw (21), the hole (20) passing through the upright (4, 4A) and being oriented substantially at right angles, on the same plane, with respect to said engagement seats (18), aligned with said transverse threaded hole (17).

10. The stand (100) according to claim 1, **characterized in that** the uprights (400) are mutually connected by at least one crossmember (120, 130), which is coupled to said uprights (400) by virtue of screw-type connection means (150).

11. The stand (100) according to claim 10, **characterized in that** each screw connection means (150) comprises:
- a pivot (160) provided with a transverse threaded hole (170),
- engagement seats (180) for the pivot (160), which are provided so as to pass through the crossmember (120, 130),
- an accommodation hole (200) for a screw (210), the hole (200) passing through the upright (400) and being oriented substantially at right angles, on the same plane, with respect to said engagement seats (180), aligned with said transverse threaded hole (170).
